# EUROPEAN PATENT SPECIFICATION

(11) **EP 0 937 760 B1**
(45) Date of publication and mention of the grant of the patent: **25.02.2004**
(21) Application number: 98202865.6
(22) Date of filing: 27.08.1998
(51) Int. Cl.: C09D 17/00, C09B 67/00

(54) **Universal colouring compositions**
Universalfarbmittelzubereitungen
Compositions de colorants universels

(30) Priority: 23.02.1998 IT MI980350
(43) Date of publication of application: 25.08.1999
(73) Proprietor: J Colors S.p.A., 20020 Lainate (Milano) (IT)
(72) Inventor: Goebel Junghanns, Carlo, 20131 Milano (IT); Pagnoni, Angelo, 20020 Lainate - Milano (IT)
(74) Representative: Siniscalco, Fabio

(56) References cited:
- EP-A- 0 255 078
- EP-A- 0 340 976
- WO-A-93/03070
- DE-C- 3 628 123
- GB-A- 2 301 109
- US-A- 4 647 647
- US-A- 4 942 213
- US-A- 5 134 187
- 'Colour Index', 1971, THE SOCIETY OF DYERS AND COLORISTS, LONDON

## Description

In its most general aspect, the present invention relates to universal colouring compositions.

The term "universal colouring compositions" is understood to refer to a series of colouring pastes comprising pigments, dispersants and solvents which can be mixed with a wide range of resinous paint bases in the preparation of coloured paint products.

It is known that a coloured paint can be prepared by mixing, in a suitable mixer, a universal colouring composition with an opaque or transparent resinous paint base, both of which are chosen and mixed in predefined ratios as a function of the desired paint colour, selected from a suitable colour chart.

Generally, it is possible to prepare paints in a wide variety of colours and colour gradations using a limited number (series) of universal colouring compositions and paint bases.

It is also known that in order for a colouring composition to be considered "universal", the dispersants contained therein must be compatible with the most diverse paint base resins, such as, for example, acrylic, epoxy, alkyd, polyester, polyvinyl, etc. resins.

These dispersants must also be soluble or dispersible in polar and apolar solvents, and capable of interacting with polar groups and functional groups of various organic and inorganic pigments so as to disperse the pigments effectively in the colouring composition, to stabilize its colour and gloss and to prevent flocculation of the pigments for a long time, both in the universal colouring compositions and in the final coloured paints.

For these reasons, various low molecular weight surfactants such as, for example, certain sodium sulphosuccinates, have been used as dispersants.

However, these dispersants are not entirely satisfactory, since some of them do not have the necessary compatibility with a wide range of pigments or resinous systems of paint bases, while others, although being compatible with various pigments and resinous systems, have a negative effect on the colouring properties of the final paints or increase their cost considerably.

Moreover, in order to disperse the pigments effectively, the abovementioned dispersants are used in combination with small amounts of dispersion-coadjuvant compounds generally consisting of ethoxylated alkylphenols, in particular ethoxylated nonylphenols.

These compounds have wetting and dispersing properties and lower the surface tension of most of the dispersants with which they are mixed, which thus helps them to interact with the functional groups of the pigments.

However, along with these useful properties, ethoxylated alkylphenols have a number of major drawbacks associated with the highly negative effect they have on the environment.

For this reason, the current trend in the paints industry is to remove ethoxylated alkylphenols from colouring compositions.

The technical problem underlying the present invention is to provide universal colouring compositions which do not have the drawbacks mentioned above with reference to the universal colouring compositions of the prior art, i.e. universal colouring compositions which can be mixed with resinous paint bases, which are free of ethoxylated alkylphenols and in which the dispersant is both compatible with a wide range of resinous systems and capable of interacting effectively with a wide variety of organic and inorganic pigments.

This problem is solved by universal colouring compositions as outlined in the appended claims.

The pigments of the universal colouring compositions according to the invention are conventional organic or inorganic pigments that are suitable for the preparation of coloured paint products.

The organic pigments can be chosen from the group comprising classes of coloured pigments which have the following international Colour Index classifications: P.B.7, P.B.15:2, P.B.15:4, P.G.7, P.R.19, P.R.122, P.R.168/112, P.V.23, P.Y.3, P.Y.74, P.Y.74/83 and P.Y.83.

The inorganic pigments can be chosen from the group comprising classes of coloured pigments which have the following international Colour Index classifications: P.B.11, P.R.101, P.W.6 and P.Y.42.

The solvents for the universal colouring compositions according to the invention are preferably chosen from the group comprising water and water-soluble organic solvents, and mixtures thereof.

Water-soluble organic solvents which are particularly preferred are ethylene glycol, diethylene glycol, propylene glycol and dipropylene glycol.

The solvents are added to the colouring compositions according to the invention in amounts such that the viscosity of the compositions is appropriately adjusted in the range 2.0-10.0 poises at 20°C, so as to make them easy to pump and meter using volumetric and/or gravimetric measuring equipment.

Besides the abovementioned ingredients, the compositions according to the invention can also comprise up to 3% by weight, relative to the weight of the composition, of other conventional additives such as viscosity modifiers, wetting agents, antifoaming agents, biocides, diluents and surfactants, as long as these are, in all cases, free of ethoxylated alkylphenols.

It has been found, surprisingly, that copolymers based on polyurethanes functionalized with amine groups can be used advantageously as dispersants in universal colouring compositions.

These functionalized copolymers are known per se, however, they have never been used as dispersants in universal colouring compositions.

Nevertheless, it has been found that the abovementioned copolymers are capable of effectively dispersing a wide variety of organic and inorganic pigments for a long time without the assistance of ethoxylated alkylphenols, and that they give the pigments colour stability and improved gloss.

In addition, the universal colouring compositions which contain them can be effectively mixed with a large number of water-based or organic-based resinous paint products without resulting in any flocculation of the pigment or adverse changes in the colouring properties of the final paints.

In the universal colouring compositions according to the invention, it is particularly preferred to use a polymer solution sold by the company BYK-Chemie GmbH under the trade name Disperbyk®-183 as dispersant.

Among the resins of aqueous paint products which are compatible with the universal colouring compositions according to the invention, mention may be made, by way of non-limiting example, of various types of copolymers, such as vinyl versatate, acrylic/styrene/butadiene copolymers and modified alkyd emulsions.

Among the resins of paint products in organic solvents which are compatible with the universal colouring compositions according to the invention, mention may be made, by way of example, of short-oil, medium-oil and long-oil alkyd resins and short-chain, medium-chain and long-chain acrylic and vinyl resins.

The universal colouring compositions according to the invention can be prepared by conventional procedures. They can be prepared, for example, by grinding a mixture which comprises the pigment, the dispersant and the solvent in a ball mill, a sand mill or a colloidal mill or in a high-speed, high-shear mixer until a uniform dispersion is obtained.

Preferably, the colouring compositions according to the invention are prepared by firstly premixing the dispersant with the solvent in a high-speed disperser, adding the pigment particles to the premix of the abovementioned components and grinding the whole in a ball mill for the time required to obtain a uniform dispersion of the pigments and the desired viscosity of the composition.

The characteristics and advantages of the invention will emerge even more clearly from the following examples, given as non-limiting guides, for the preparation of two series of universal colouring compositions according to the invention.

### EXAMPLE 1

A series of twelve universal colouring compositions according to the invention were prepared, in which each composition of the series was obtained by firstly premixing, with stirring and in a disperser at high speed, a dispersant with a mixture of water and propylene glycol, adding the pigments to the premix of the abovementioned components and grinding the whole in a ball mill for the time required to obtain a uniform dispersion of the pigments and the desired viscosity of the composition.

In each composition, the commercial product Disperbyk®-183 was used as dispersant and a mixture of water and propylene glycol was used as solvent.

Table 1 gives the classes of the coloured pigments according to the international Colour Index classification and the weight ratios of the mixtures of water and propylene glycol used for each of the compositions of the series.

Table 2, on the other hand, gives the weight percentages of the components and the viscosity for each composition.

For each class, the organic or inorganic nature of the pigments belonging thereto is specified.

**TABLE 1**

| Name | Pigments | Water/glycol weight ratio | Type of pigments |
|---|---|---|---|
| Mid-yellow | P.Y. 74/83 | 1.5:1 | Organic |
| Red for Exterior use | P.R. 168/112 | 1:1.7 | Organic |
| Red oxide | P.R. 101 | 1:1.1 | Inorganic |
| Magenta | P.R. 122 | 1:1.7 | Organic |
| Brown oxide | P.R. 101; PB 11; P.Y. 42 | 1:1.5 | Inorganic |
| Phthalo green | P.G. 7 | 1:1.65 | Organic |
| Phthalo blue | P.B. 15:2 | 1:5.5 | Organic |
| Carbon black | P.B. 7 | 1:2 | Organic |
| Titanium white | P.W. 6 | 1:1.3 | Inorganic |
| Yellow oxide | P.Y. 42 | 1:1 | Inorganic |
| Yellow for exterior use | P.Y. 74 | 2.3:1 | Organic |
| Natural umber | P.R. 101, PY 42; P.B. 7 | 1:1.5 | Inorganic |

**TABLE 2**

| Name | Pigments % by wt. | Dispersant % by wt. | Solvent % by wt. | Viscosity poises |
|---|---|---|---|---|
| Mid-yellow | 25 | 2 | 73 | 8.0 |
| Red for exterior use | 10 | 8 | 82 | 6.8 |
| Red oxide | 65 | 7 | 28 | 9.6 |
| Magenta | 9 | 36 | 55 | 6.8 |
| Brown oxide | 46 | 14 | 40 | 5.3 |
| Phthalo green | 10 | 50 | 40 | 5.4 |
| Phthalo blue | 6 | 47 | 47 | 2.4 |
| Carbon black | 8 | 45 | 47 | 5.5 |
| Titanium white | 58 | 12 | 30 | 6.3 |
| Yellow oxide | 55 | 9 | 36 | 9.7 |
| Yellow for exterior use | 23 | 31 | 46 | 6.3 |
| Natural umber | 23 | 27 | 50 | 7.1 |

### EXAMPLE 2

A second series of twelve universal colouring compositions according to the invention were prepared, in which each composition of the series was obtained by the process described for the preparation of the series of universal colouring compositions in Example 1. In each composition, the commercial product Disperbyk®-183 was used as dispersant and a mixture of water and propylene glycol was used as solvent.

Table 3 gives the classes of the coloured pigments according to the international Colour Index classification and the weight ratios of the mixtures of water and propylene glycol used for each of the compositions of the series. Table 4, on the other hand, gives the weight percentages of the components and the viscosity for each composition. For each class, the organic or inorganic nature of the pigments belonging thereto is specified.

**TABLE 3**

| Name | Pigments | Water/glycol weight ratio | Type of pigments |
|---|---|---|---|
| Titanium white | P.W. 6 | 1:1.3 | Inorganic |
| Lemon | P.Y. 3; | 2.3:1 | Organic |
| | P.Y. 74 | | |
| Yellow | P.Y. 83 | 1.5:1 | Organic |
| Yellow oxide | P.Y. 42 | 1:1 | Inorganic |
| Light red | P.R. 112 | 1:1.7 | Organic |
| Red | P.R. 19 | 1:4 | Organic |
| Red oxide | P.R. 101 | 1:1.1 | Inorganic |
| Phthalo green | P.G. 7 | 1:1.65 | Organic |
| Phthalo blue | P.B. 15:4 | 1:5.5 | Organic |
| Violet | P.V. 23 | 1:2 | Organic |
| Carbon black | P.B. 7 | 1:2 | Organic |
| Brown oxide | P.Y. 42; PR | 1:1.5 | Inorganic |
| | 101; P.B. 7 | | |

**TABLE 4**

| Name | Pigments % by wt. | Dispersant % by wt. | Solvents % by wt. | Viscosity poises |
|---|---|---|---|---|
| Titanium white | 64 | 5 | 31 | 6.3 |
| Lemon | 42 | 12 | 46 | 6.3 |
| Yellow | 38 | 24 | 38 | 8.0 |
| Yellow oxide | 56 | 7 | 37 | 9.7 |
| Light red | 21 | 23 | 56 | 6.8 |
| Red | 16 | 21 | 63 | 2.1 |
| Red oxide | 55 | 14 | 31 | 9.6 |
| Phthalo green | 30 | 18 | 52 | 5.4 |
| Phthalo blue | 12 | 34 | 54 | 2.4 |
| Violet | 7 | 26 | 67 | 8.0 |
| Carbon black | 28 | 14 | 58 | 5.5 |
| Brown oxide | 53 | 17 | 30 | 5.3 |

## Claims

1. Universal colouring compositions **characterized in that** they comprise 5-70% by weight of pigments, 1-50% by weight of Disperbyk®-183 and 20-80% by weight of solvents, and in which the pigments Disperbyk®-183 weight ratio ranges from 0.1:1 to 15:1, said pigments are of inorganic nature chosen from the group comprising classes of coloured pigments having the international Colour Index classifications P.B.11, P.R.101, P.W.6 and P.Y. 42, and of organic nature chosen from the group comprising classes of coloured pigments having the international Colour Index classifications: P.B.7, P.B.15:2, P.B.15:4, P.G.7, P.R.19, P.R.122, P.R.168/112, P.V.23, P.Y.3, P.Y.74, P.Y.74/83 and P.Y.83.

2. Universal colouring compositions according to claim 1, in which the said solvents are chosen from the group comprising water and water-soluble organic solvents, and mixtures thereof.

3. Universal colouring compositions according to Claim 2, in which the said water-soluble organic solvents are chosen from the group comprising ethylene glycol, diethylene glycol, propylene glycol and dipropylene glycol.

4. Universal colouring compositions according to any one of the preceding claims, **characterized in that** they further comprise up to 3% by weight, relative to the weight of the composition, of additives chosen from the .group comprising viscosity modifiers, wetting agents, antifoaming agents, biocides, diluents and surfactants.

5. Universal colouring compositions according to any one of the preceding claims, **characterized in that** they have a viscosity of 2.0-10.0 poises at 20°C.

6. Universal colouring composition according to Claim 1, **characterized in that** it comprises 25% by weight of pigments P.Y. 74/83, 2% by weight of Disperbyk®-183 and 73% by weight of a mixture of water and propylene glycol in a 1.5:1 weight ratio.

7. Universal colouring composition, **characterized in that** it comprises 10% by weight of pigments P.R. 168/112, 8% by weight of Disperbyk®-183 and 82% by weight of a mixture of water and propylene glycol in a 1:1.7 weight ratio.

8. Universal colouring composition according to Claim 1, **characterized in that** it comprises 65% by weight of pigments P.R. 101, 7% by weight of Disperbyk®-183 and 28% by weight of a mixture of water and propylene glycol in a 1:1.1 weight ratio.

9. Universal colouring composition according to Claim 1, **characterized in that** it comprises 9% by weight of pigments P.R. 122, 36% by weight of Disperbyk®-183 and 55% by weight of a mixture of water and propylene glycol in a 1:1.7 weight ratio.

10. Universal colouring composition according to Claim 1, **characterized in that** it comprises 46% by weight of pigments P.R. 101, P.B. 11 and P.Y. 42, 14% by weight of Disperbyk®-183 and 40% by weight of a mixture of water and propylene glycol in a 1:1.5 weight ratio.

11. Universal colouring composition according to Claim 1, **characterized in that** it comprises 10% by weight of pigments P.G. 7, 50% by weight of Disperbyk®-183 and 40% by weight of a mixture of water and propylene glycol in a 1:1.65 weight ratio.

12. Universal colouring composition according to Claim 1, **characterized in that** it comprises 6% by weight of pigments P.B. 15:2, 47% by weight of Disperbyk®-183 and 47% by weight of a mixture of water and propylene glycol in a 1:5.5 weight ratio.

13. Universal colouring composition according to Claim 1, **characterized in that** it comprises 8% by weight of pigments P.B. 7, 45% by weight of Disperbyk®-183 and 47% by weight of a mixture of water and propylene glycol in a 1:2 weight ratio.

14. Universal colouring composition according to Claim 1, **characterized in that** it comprises 58% by weight of pigments P.W. 6, 12% by weight of Disperbyk®-183 and 30% by weight of a mixture of water and propylene glycol in a 1:1.3 weight ratio.

15. Universal colouring composition according to Claim 1, **characterized in that** it comprises 55% by weight of pigments P.Y. 42, 9% by weight of Disperbyk®-183 and 36% by weight of a mixture of water and propylene glycol in a 1:1 weight ratio.

16. Universal colouring composition according to Claim 1, **characterized in that** it comprises 23% by weight of pigments P.Y. 74, 31% by weight of Disperbyk®-183 and 46% by weight of a mixture of water and propylene glycol in a 2.3:1 weight ratio.

17. Universal colouring composition according to Claim 1, **characterized in that** it comprises 23% by weight of pigments P.R. 101, P.Y. 42 and P.B. 7, 27% by weight of Disperbyk®-183 and 50% by weight of a mixture of water and propylene glycol in a 1:1.5 weight ratio.

18. Universal colouring composition according to Claim 1, **characterized in that** it comprises 64% by weight of pigments P.W. 6, 5% by weight of Disperbyk®-183 and 31% by weight of a mixture of water and propylene glycol in a 1:1.3 weight ratio.

19. Universal colouring composition according to Claim 1, **characterized in that** it comprises 42% by weight of pigments P.Y. 74 and P.Y. 3, 12% by weight of Disperbyk®-183 and 46% by weight of a mixture of water and propylene glycol in a 2.3:1 weight ratio.

20. Universal colouring composition according to Claim 1, **characterized in that** it comprises 38% by weight of pigments P.Y. 83, 24% by weight of Disperbyk®-183 and 38% by weight of a mixture of water and propylene glycol in a 1.5:1 weight ratio.

21. Universal colouring composition according to Claim 1, **characterized in that** it comprises 56% by weight of pigments P.Y. 42, 7% by weight of Disperbyk®-183 and 37% by weight of a mixture of water and propylene glycol in a 1:1 weight ratio.

22. Universal colouring composition according to Claim 1, **characterized in that** it comprises 21% by weight of pigments P.R. 112, 23% by weight of Disperbyk®-183 and 56% by weight of a mixture of water and propylene glycol in a 1:1.7 weight ratio.

23. Universal colouring composition according to Claim 1, **characterized in that** it comprises 16% by weight of pigments P.R. 19, 21% by weight of Disperbyk®-183 and 63% by weight of a mixture of water and propylene glycol in a 1:4 weight ratio.

24. Universal colouring composition according to Claim 1, **characterized in that** it comprises 55% by weight of .pigments P.R. 101, 14% by weight of Disperbyk®-183 and 31% by weight of a mixture of water and propylene glycol in a 1:1.1 weight ratio.

25. Universal colouring composition according to Claim 1, **characterized in that** it comprises 30% by weight of pigments P.G. 7, 18% by weight of Disperbyk®-183 and 52% by weight of a mixture of water and propylene glycol in a 1:1.65 weight ratio.

26. Universal colouring composition according to Claim 1, **characterized in that** it comprises 12% by weight of pigments P.B. 15:4, 34% by weight of Disperbyk®-183 and 54% by weight of a mixture of water and propylene glycol in a 1:5.5 weight ratio.

27. Universal colouring composition according to Claim 1, **characterized in that** it comprises 7% by weight of pigments P.V. 23, 26% by weight of Disperbyk®-183 and 67% by weight of a mixture of water and propylene glycol in a 1:2 weight ratio.

28. Universal colouring composition according to Claim 1, **characterized in that** it comprises 28% by weight of pigments P.B. 7, 14% by weight of Disperbyk®-183 and 58% by weight of a mixture of water and propylene glycol in a 1:2 weight ratio.

29. Universal colouring composition according to Claim 1, **characterized in that** it comprises 53% by weight of pigments P.Y. 42, P.R. 101 and P.B. 7, 17% by weight of Disperbyk®-183 and 30% by weight of a mixture of water and propylene glycol in a 1:1.5 weight ratio.

## Patentansprüche

1. Universalfarbmittelzusammensetzungen, **dadurch gekennzeichnet**, das sie 5 - 70 Gew.-% Pigmente, 1 - 50 Gew.-% Disperbyk®-183 und 20 - 80 Gew.-% Lösemittel umfassen, und wobei das Gewichtsverhältnis Pigmente/Disperbyk®-183 im Bereich von 0,1:1 bis 15:1 liegt, die Pigmente anorganischer Natur - ausgewählt aus der Gruppe, die Klassen farbiger Pigmente mit den internationalen Colour Index-Klassifikationen P.B.11, P.R.101, P.W.6 und P.Y.42 umfasst - und organischer Natur - ausgewählt aus der Gruppe, die Klassen farbiger Pigmente mit den internationalen Colour Index-Klassifikationen P.B.7, P.B.15:2, P.B.15:4, P.G.7, P.R.19, P.R.122, P.R.168/112, P.V.23, P.Y.3, P.Y.74, P.Y.74/83 und P.Y.83 umfasst - sind.

2. Universalfarbmittelzusammensetzungen gemäß Anspruch 1, wobei die Lösemittel aus der Gruppe, die Wasser und wasserlösliche organische Lösemittel und Gemische derselben umfasst, ausgewählt sind.

3. Universalfarbmittelzusammensetzungen gemäß Anspruch 2, wobei die wasserlöslichen organischen Lösemittel aus der Gruppe, die Ethylenglykol, Diethylenglykol, Propylenglykol und Dipropylenglykol umfasst, ausgewählt sind.

4. Universalfarbmittelzusammensetzungen gemäß einem der vorhergehenden Ansprüche, **dadurch gekennzeichnet, dass** sie ferner - bezogen auf das Gewicht der Zusammensetzung - bis zu 3 Gew.-% Zusatzstoffe umfassen, die aus der Gruppe, die Viskositätsmodifizierungsmittel, Befeuchtungsmittel, Antischaumbildner, Biozide, Verdünnungsmittel und Netzmittel umfasst, ausgewählt sind.

5. Universalfarbmittelzusammensetzungen gemäß einem der vorhergehenden Ansprüche, **dadurch gekennzeichnet, dass** sie eine Viskosität von 2,0 - 10,0 Poise bei 20 °C aufweisen.

6. Universalfarbmittelzusammensetzung gemäß Anspruch 1, **dadurch gekennzeichnet, dass** sie 25 Gew.-% Pigmente P.Y. 74/83, 2 Gew.-% Disperbyk®-183 und 73 Gew.-% eines Gemischs von Wasser und Propylenglykol in einem Gewichtsverhältnis von 1,5:1 umfasst.

7. Universalfarbmittelzusammensetzung **dadurch gekennzeichnet, dass** sie 10 Gew.-% Pigmente P.R. 168/112, 8 Gew.-% Disperbyk®-183 und 82 Gew.-% eines Gemischs von Wasser und Propylenglykol in einem Gewichtsverhältnis von 1:1,7 umfasst.

8. Universalfarbmittelzusammensetzung gemäß Anspruch 1, **dadurch gekennzeichnet, dass** sie 65 Gew.-% Pigmente P.R. 101, 7 Gew.-% Disperbyk®-183 und 28 Gew.-% eines Gemischs von Wasser und Propylenglykol in einem Gewichtsverhältnis von 1:1,1 umfasst.

9. Universalfarbmittelzusammensetzung gemäß Anspruch 1, **dadurch gekennzeichnet, dass** sie 9 Gew.-% Pigmente P.R. 122, 36 Gew.-% Disperbyk®-183 und 55 Gew.-% eines Gemischs von Wasser und Propylenglykol in einem Gewichtsverhältnis von 1:1,7 umfasst.

10. Universalfarbmittelzusammensetzung gemäß Anspruch 1, **dadurch gekennzeichnet, dass** sie 46 Gew.-% Pigmente P.R. 101, P.B. 11 und P.Y. 42, 14 Gew.-% Disperbyk®-183 und 40 Gew.-% eines Gemischs von Wasser und Propylenglykol in einem Gewichtsverhältnis von 1:1,5 umfasst.

11. Universalfarbmittelzusammensetzung gemäß Anspruch 1, **dadurch gekennzeichnet, dass** sie 10 Gew.-% Pigmente P.G. 7, 50 Gew.-% Disperbyk®-183 und 40 Gew.-% eines Gemischs von Wasser und Propylenglykol in einem Gewichtsverhältnis von 1:1,65 umfasst.

12. Universalfarbmittelzusammensetzung gemäß Anspruch 1, **dadurch gekennzeichnet, dass** sie 6 Gew.-% Pigmente P.B. 15:2, 47 Gew.-% Disperbyk®-183 und 47 Gew.-% eines Gemischs von Wasser und Propylenglykol in einem Gewichtsverhältnis von 1:5,5 umfasst.

13. Universalfarbmittelzusammensetzung gemäß Anspruch 1, **dadurch gekennzeichnet, dass** sie 8 Gew.-% Pigmente P.B. 7, 45 Gew.-% Disperbyk®-183 und 47 Gew.-% eines Gemischs von Wasser und Propylenglykol in einem Gewichtsverhältnis von 1:2 umfasst.

14. Universalfarbmittelzusammensetzung gemäß Anspruch 1, **dadurch gekennzeichnet, dass** sie 58 Gew.-% Pigmente P.W. 6, 12 Gew.-% Disperbyk®-183 und 30 Gew.-% eines Gemischs von Wasser und Propylenglykol in einem Gewichtsverhältnis von 1:1,3 umfasst.

15. Universalfarbmittelzusammensetzung gemäß Anspruch 1, **dadurch gekennzeichnet, dass** sie 55 Gew.-% Pigmente P.Y. 42, 9 Gew.-% Disperbyk®-183 und 36 Gew.-% eines Gemischs von Wasser und Propylenglykol in einem Gewichtsverhältnis von 1:1 umfasst.

16. Universalfarbmittelzusammensetzung gemäß Anspruch 1, **dadurch gekennzeichnet, dass** sie 23 Gew.-% Pigmente P.Y. 74, 31 Gew.-% Disperbyk®-183 und 46 Gew.-% eines Gemischs von Wasser und Propylenglykol in einem Gewichtsverhältnis von 2,3:1 umfasst.

17. Universalfarbmittelzusammensetzung gemäß Anspruch 1, **dadurch gekennzeichnet, dass** sie 23 Gew.-% Pigmente P.R. 101, P.Y. 42 und P.B. 7, 27 Gew.-% Disperbyk®-183 und 50 Gew.-% eines Gemischs von Wasser und Propylenglykol in einem Gewichtsverhältnis von 1:1,5 umfasst.

18. Universalfarbmittelzusammensetzung gemäß Anspruch 1, **dadurch gekennzeichnet, dass** sie 64 Gew.-% Pigmente P.W. 6, 5 Gew.-% Disperbyk®-183 und 31 Gew.-% eines Gemischs von Wasser und Propylenglykol in einem Gewichtsverhältnis von 1:1,3 umfasst.

19. Universalfarbmittelzusammensetzung gemäß Anspruch 1, **dadurch gekennzeichnet, dass** sie 42 Gew.-% Pigmente P.Y. 74 und P.Y. 3, 12 Gew.-% Disperbyk®-183 und 46 Gew.-% eines Gemischs von Wasser und Propylenglykol in einem Gewichtsverhältnis von 2,3:1 umfasst.

20. Universalfarbmittelzusammensetzung gemäß Anspruch 1, **dadurch gekennzeichnet, dass** sie 38 Gew.-% Pigmente P.Y. 83, 24 Gew.-% Disperbyk®-183 und 38 Gew.-% eines Gemischs von Wasser und Propylenglykol in einem Gewichtsverhältnis von 1,5:1 umfasst.

21. Universalfarbmittelzusammensetzung gemäß Anspruch 1, **dadurch gekennzeichnet, dass** sie 56 Gew.-% Pigmente P.Y. 42, 7 Gew.-% Disperbyk®-183 und 37 Gew.-% eines Gemischs von Wasser und Propylenglykol in einem Gewichtsverhältnis von 1:1 umfasst.

22. Universalfarbmittelzusammensetzung gemäß Anspruch 1, **dadurch gekennzeichnet, dass** sie 21 Gew.-% Pigmente P.R. 112, 23 Gew.-% Disperbyk®-183 und 56 Gew.-% eines Gemischs von Wasser und Propylenglykol in einem Gewichtsverhältnis von 1:1,7 umfasst.

23. Universalfarbmittelzusammensetzung gemäß Anspruch 1, **dadurch gekennzeichnet, dass** sie 16 Gew.-% Pigmente P.R. 19, 21 Gew.-% Disperbyk®-183 und 63 Gew.-% eines Gemischs von Wasser und Propylenglykol in einem Gewichtsverhältnis von 1:4 umfasst.

24. Universalfarbmittelzusammensetzung gemäß Anspruch 1, **dadurch gekennzeichnet, dass** sie 55 Gew.-% Pigmente P.R. 101, 14 Gew.-% Disperbyk®-183 und 31 Gew.-% eines Gemischs von Wasser und Propylenglykol in einem Gewichtsverhältnis von 1:1,1 umfasst.

25. Universalfarbmittelzusammensetzung gemäß Anspruch 1, **dadurch gekennzeichnet, dass** sie 30 Gew.-% Pigmente P.G. 7, 18 Gew.-% Disperbyk®-183 und 52 Gew.-% eines Gemischs von Wasser und Propylenglykol in einem Gewichtsverhältnis von 1:1,65 umfasst.

26. Universalfarbmittelzusammensetzung gemäß Anspruch 1, **dadurch gekennzeichnet, dass** sie 12 Gew.-% Pigmente P.B. 15:4, 34 Gew.-% Disperbyk®-183 und 54 Gew.-% eines Gemischs von Wasser und Propylenglykol in einem Gewichtsverhältnis von 1:5,5 umfasst.

27. Universalfarbmittelzusammensetzung gemäß Anspruch 1, **dadurch gekennzeichnet, dass** sie 7 Gew.-% Pigmente P.V. 23, 26 Gew.-% Disperbyk®-183 und 67 Gew.-% eines Gemischs von Wasser und Propylenglykol in einem Gewichtsverhältnis von 1:2 umfasst.

28. Universalfarbmittelzusammensetzung gemäß Anspruch 1, **dadurch gekennzeichnet, dass** sie 28 Gew.-% Pigmente P.B. 7, 14 Gew.-% Disperbyk®-183 und 58 Gew.-% eines Gemischs von Wasser und Propylenglykol in einem Gewichtsverhältnis von 1:2 umfasst.

29. Universalfarbmittelzusammensetzung gemäß Anspruch 1, **dadurch gekennzeichnet, dass** sie 53 Gew.-% Pigmente P.Y. 42, P.R. 101 und P.B. 7, 17 Gew.-% Disperbyk®-183 und 30 Gew.-% eines Gemischs von Wasser und Propylenglykol in einem Gewichtsverhältnis von 1:1,5 umfasst.

## Revendications

1. Compositions colorantes universelles, **caractérisées en ce qu'**elles comprennent 5 à 70 % en poids de pigments, 1 à 50 % en poids de Disperbyk® 183 et 20 à 80 % en poids de solvants, et dans lesquelles le rapport pondéral pigments/Disperbyk® 183 s'échelonne de 0,1:1 à 15:1, lesdits pigments sont de nature minéral choisis dans le groupe constitué par les classes de pigments colorés ayant des classifications d'indice de couleur international P.B. 11, P.R. 101, P.W. 6 et P.Y. 42 et de nature organique choisis dans le groupe constitué par les classes de pigments colorés ayant des classifications d'indice de couleur international P.B. 7, P.B. 15:2, P.B. 15:4, P.G. 7, P.R. 19, P.R. 122, P.R. 168/112, P.V. 23, P.Y. 3, P.Y. 74, P.Y. 74/83 et P.Y. 83.

2. Compositions colorantes universelles selon la revendication 1, dans lesquelles lesdits solvants sont choisis dans le groupe constitué de l'eau et des solvants organiques solubles dans l'eau, et les mélanges de ceux-ci.

3. Compositions colorantes universelles selon la revendication 2, dans lesquelles lesdits solvants organiques solubles dans l'eau sont choisis dans le groupe constitué par l'éthylèneglycol, le diéthylèneglycol, le propylèneglycol et le dipropylèneglycol.

4. Compositions colorantes universelles selon l'une quelconque des revendications précédentes, **caractérisées en ce qu'**elles comprennent en outre jusqu'à 3 % en poids, par rapport au poids de la composition, d'additifs choisis dans le groupe constitué par les agents modifiant la viscosité, les agents mouillants, les agents antimousse, les biocides, les diluants et les tensioactifs.

5. Compositions colorantes universelles selon l'une quelconque des revendications précédentes, **caractérisées en ce qu'**elles ont une viscosité de 2,0 à 10,0 poises à 20°C.

6. Composition colorante universelle selon la revendication 1, **caractérisée en ce qu'**elle comprend 25 % en poids de pigments P.Y. 74/83, 2 % en poids de Disperbyk® 183 et 73 % en poids d'un mélange d'eau et de propylèneglycol dans un rapport pondéral de 1,5:1.

7. Composition colorante universelle, **caractérisée en ce qu'**elle comprend 10 % en poids de pigments P.R. 168/112, 8 % en poids de Disperbyk® 183 et 82 % en poids d'un mélange d'eau et de propylèneglycol dans un rapport pondéral de 1:1,7.

8. Composition colorante universelle selon la revendication 1, **caractérisée en ce qu'**elle comprend 65 % en poids de pigments P.R. 101, 7 % en poids de Disperbyk® 183 et 28 % en poids d'un mélange d'eau et de propylèneglycol dans un rapport pondéral de 1:1,1.

9. Composition colorante universelle selon la revendication 1, **caractérisée en ce qu'**elle comprend 9 % en poids de pigments P.R. 122, 36 % en poids de Disperbyk® 183 et 55 % en poids d'un mélange d'eau et de propylèneglycol dans un rapport pondéral de 1:1,7.

10. Composition colorante universelle selon la revendication 1, **caractérisée en ce qu'**elle comprend 46 % en poids de pigments P.R. 101, P.B. 11 et P.Y. 42, 14 % en poids de Disperbyk® 183 et 40 % en poids d'un mélange d'eau et de propylèneglycol dans un rapport pondéral de 1:1,5.

11. Composition colorante universelle selon la revendication 1, **caractérisée en ce qu'**elle comprend 10 % en poids de pigments P.G. 7, 20 % en poids de Disperbyk® 183 et 40 % en poids d'un mélange d'eau et de propylèneglycol dans un rapport pondéral de 1:1,65.

12. Composition colorante universelle selon la revendication 1, **caractérisée en ce qu'**elle comprend 6 % en poids de pigments P.B. 15:2, 47 % en poids de Disperbyk® 183 et 47 % en poids d'un mélange d'eau et de propylèneglycol dans un rapport pondéral de 1:5,5.

13. Composition colorante universelle selon la revendication 1, **caractérisée en ce qu'**elle comprend 8 % en poids de pigments P.B. 7, 45 % en poids de Disperbyk® 183 et 47 % en poids d'un mélange d'eau et de propylèneglycol dans un rapport pondéral de 1:2.

14. Composition colorante universelle selon la revendication 1, **caractérisée en ce qu'**elle comprend 58 % en poids de pigments P.W. 6, 12 % en poids de Disperbyk® 183 et 30 % en poids d'un mélange d'eau et de propylèneglycol dans un rapport pondéral de 1:1,3.

15. Composition colorante universelle selon la revendication 1, **caractérisée en ce qu'**elle comprend 55 % en poids de pigments P.Y. 42, 9 % en poids de Disperbyk® 183 et 36 % en poids d'un mélange d'eau et de propylèneglycol dans un rapport pondéral de 1:1.

16. Composition colorante universelle selon la revendication 1, **caractérisée en ce qu'**elle comprend 23 % en poids de pigments P.Y. 74, 31 % en poids de Disperbyk® 183 et 46 % en poids d'un mélange d'eau et de propylèneglycol dans un rapport pondéral de 2,3:1.

17. Composition colorante universelle selon la revendication 1, **caractérisée en ce qu'**elle comprend 23 % en poids de pigments P.R. 101, P.Y. 42 et P.B. 7, 77 % en poids de Disperbyk® 183 et 50 % en poids d'un mélange d'eau et de propylèneglycol dans un rapport pondéral de 1:1,5.

18. Composition colorante universelle selon la revendication 1, **caractérisée en ce qu'**elle comprend 64 % en poids de pigments P.W. 6, 5 % en poids de Disperbyk® 183 et 31 % en poids d'un mélange d'eau et de propylèneglycol dans un rapport pondéral de 1:1,3.

19. Composition colorante universelle selon la revendication 1, **caractérisée en ce qu'**elle comprend 42 % en poids de pigments P.Y. 74 et P.Y. 3, 12 % en poids de Disperbyk® 183 et 46 % en poids d'un mélange d'eau et de propylèneglycol dans un rapport pondéral de 2,3:1.

20. Composition colorante universelle selon la revendication 1, **caractérisée en ce qu'**elle comprend 38 % en poids de pigments P.Y. 83, 24 % en poids de Disperbyk® 183 et 38 % en poids d'un mélange d'eau et de propylèneglycol dans un rapport pondéral de 1,5:1.

21. Composition colorante universelle selon la revendication 1, **caractérisée en ce qu'**elle comprend 56 % en poids de pigments P.Y. 42, 7 % en poids de Disperbyk® 183 et 37 % en poids d'un mélange d'eau et de propylèneglycol dans un rapport pondéral de 1:1.

22. Composition colorante universelle selon la revendication 1, **caractérisée en ce qu'**elle comprend 21 % en poids de pigments P.R. 112, 23 % en poids de Disperbyk® 183 et 56 % en poids d'un mélange d'eau et de propylèneglycol dans un rapport pondéral de 1:1,7.

23. Composition colorante universelle selon la revendication 1, **caractérisée en ce qu'**elle comprend 16 % en poids de pigments P.R. 19, 21 % en poids de Disperbyk® 183 et 63 % en poids d'un mélange d'eau et de propylèneglycol dans un rapport pondéral de 1:4.

24. Composition colorante universelle selon la revendication 1, **caractérisée en ce qu'**elle comprend 55 % en poids de pigments P.R. 101, 14 % en poids de Disperbyk® 183 et 31 % en poids d'un mélange d'eau et de propylèneglycol dans un rapport pondéral de 1:1,1.

25. Composition colorante universelle selon la revendication 1, **caractérisée en ce qu'**elle comprend 30 % en poids de pigments P.G. 7, 18 % en poids de Disperbyk® 183 et 52 % en poids d'un mélange d'eau et de propylèneglycol dans un rapport pondéral de 1:1,65.

26. Composition colorante universelle selon la revendication 1, **caractérisée en ce qu'**elle comprend 12 % en poids de pigments P.B. 15:4, 34 % en poids de Disperbyk® 183 et 54 % en poids d'un mélange d'eau et de propylèneglycol dans un rapport pondéral de 1:5,5.

27. Composition colorante universelle selon la revendication 1, **caractérisée en ce qu'**elle comprend 7 % en poids de pigments P.V. 23, 26 % en poids de Disperbyk® 183 et 67 % en poids d'un mélange d'eau et de propylèneglycol dans un rapport pondéral de 1:2.

28. Composition colorante universelle selon la revendication 1, **caractérisée en ce qu'**elle comprend 28 % en poids de pigments P.B. 7, 14 % en poids de Disperbyk® 183 et 58 % en poids d'un mélange d'eau et de propylèneglycol dans un rapport pondéral de 1:2.

29. Composition colorante universelle selon la revendication 1, **caractérisée en ce qu'**elle comprend 53 % en poids de pigments P.Y. 42, P.R. 101 et P.B. 7, 17 % en poids de Disperbyk® 183 et 30 % en poids d'un mélange d'eau et de propylèneglycol dans un rapport pondéral de 1:1,5.
